# FASCICULE DE BREVET EUROPEEN

(11) **EP 2 766 431 B1**
(45) Date de publication et mention de la délivrance du brevet: **26.01.2022**
(21) Numéro de dépôt: 12780228.8
(22) Date de dépôt: 08.10.2012
(51) Int. Cl.: C08L 77/06, C08L 23/08, C08L 33/06, B32B 27/34, B32B 27/30

(54) **COMPOSITION COMPRENANT UN POLYAMIDE SEMI-AROMATIQUE ET UNE POLYOLÉFINE RÉTICULÉE**
ZUSAMMENSETZUNG MIT EINEM HALBAROMATISCHEN POLYAMID UND EINEM VERNETZTEN POLYOLEFIN
COMPOSITION COMPRISING A SEMI-AROMATIC POLYAMIDE AND A CROSSLINKED POLYOLEFIN

(30) Priorité: 13.10.2011 FR 1159259
(43) Date de publication de la demande: 20.08.2014
(73) Titulaire: Arkema France, 92705 Colombes (FR)
(72) Inventeur: BLONDEL, Philippe, F-27300 Bernay (FR); GERARD, Franck, F-27300 Valailles (FR)
(86) Numéro de dépôt international: PCT/FR2012/052275
(87) Numéro de publication internationale: WO 2013/054025

(56) Documents cités:
- EP-A2- 1 505 099
- WO-A2-2011/015790
- US-A1- 2003 008 976
- US-A1- 2011 206 881

## Description

La présente invention a pour objet une composition comprenant au moins un polyamide semi-aromatique et au moins une polyoléfine réticulée, son procédé de préparation, ainsi que ses utilisations, notamment dans la fabrication d'objets divers, comme des biens de consommation courante tels que des équipements électriques, électroniques ou automobiles, du matériel chirurgical, de l'emballage ou encore des articles de sport.

### [L'art antérieur et le problème technique]

Dans l'industrie automobile par exemple, les compositions à base d'un ou plusieurs polyamides semi-aromatiques sont de plus en plus utilisées, en raison des remarquables propriétés thermomécaniques qu'elles confèrent aux pièces réalisées à partir de telles compositions.

Pour améliorer simultanément la préparation de ces compositions ainsi que leur transformation, notamment par la mise en œuvre d'une étape d'extrusion, de co-extrusion ou d'extrusion-soufflage, le document WO 2011/015790 décrit des compositions comprenant de 45% à 95% en poids d'un polyamide semi-aromatique et de 5% à 55% en poids d'au moins une polyoléfine réticulée, les proportions pondérales étant données par rapport au poids total de la composition.

La polyoléfine réticulée, qui se présente comme une phase dispersée dans la matrice formée par le polyamide semi-aromatique, provient de la réaction :
- d'un produit (A) comprenant un époxyde insaturé,
- d'un produit (B) comprenant un anhydride d'acide carboxylique insaturé ou un acide polycarboxylique, et éventuellement
- d'un produit (C) comprenant un acide carboxylique insaturé ou un acide alpha-oméga-aminocarboxylique.

Si de telles compositions peuvent effectivement bien être transformées par extrusion, co-extrusion ou extrusion-soufflage, on peut observer que les surfaces intérieure et extérieure des tubes extrudés à partir de ces compositions n'ont pas toujours un aspect régulier et peuvent présenter des défauts de surface conférant un aspect qui n'est pas lisse mais mat, voire rugueux. Un aspect non régulier de ces surfaces externes des tubes extrudés peut ainsi avoir des conséquences dommageables sur les propriétés mécaniques de ces tubes.

On peut également observer la formation de dépôts au niveau de la vis et/ou de la filière d'extrusion, également appelés "larmes de filières", lors de cette étape de transformation. La formation de ces larmes de filière n'est pas sans incidence sur la production des tubes et sur l'entretien du matériel d'extrusion.

Ainsi, il existe un réel besoin de trouver de nouvelles compositions formées d'une phase dispersée de polyoléfine réticulée dans une matrice de polyamide(s) semi-aromatique(s) permettant non seulement une transformation sans formation de larmes de filière, mais assurant également l'obtention de pièces extrudées dotées de surfaces externes lisses, de telles pièces conservant bien évidemment tous les avantages en termes de résistance mécanique, de résistance au vieillissement et de tenue à haute température des pièces formées à partir des compositions à base de polyamide(s) semi-aromatique(s) de l'art antérieur.

### [Brève description de l'invention]

De façon surprenante, la demanderesse a trouvé que ce besoin est atteint avec une composition du type précité, à savoir une composition comprenant au moins un polyamide semi-aromatique et au moins une polyoléfine réticulée, la polyoléfine réticulée étant obtenue à partir d'au moins un produit (A) comprenant un époxyde insaturé et d'au moins un produit (B) comprenant un anhydride d'acide carboxylique insaturé.

Selon l'invention, la composition présente des teneurs pondérales en (A) et (B), notées respectivement [A] et [B], telles que le rapport [B] / [A] est compris entre 4 et 14.

Grâce à ce choix particulier des teneurs pondérales en (A) et (B), la composition selon l'invention peut être transformée par extrusion, co-extrusion ou extrusion-soufflage, et permet d'obtenir des pièces dont les surfaces externes sont lisses et ce, sans formation de larmes de filière.

Les résultats expérimentaux montrent que l'amélioration des états de surface des pièces extrudées, telles que des tubes, est directement liée à l'amélioration de la morphologie de la composition selon l'invention, par rapport à celle de la composition décrite dans le document WO 2011/015790. En effet, une étude de la composition selon l'invention par microscopie électronique à balayage (MEB) montre que la composition selon l'invention présente une morphologie nodulaire particulièrement fine et régulière, les nodules de polyoléfine réticulée étant dispersés de manière homogène dans la matrice de polyamide semi-aromatique.

Cette morphologie améliorée confère à la composition selon l'invention une viscosité parfaitement compatible avec une transformation par extrusion, d'autant que cette viscosité n'évolue que modérément à chaud. Ainsi, on est en mesure de réaliser des pièces dont le calibrage, en particulier l'épaisseur, est également optimisé.

L'invention porte également sur un procédé de préparation de la composition, ainsi que sur ses utilisations, notamment comme couche constitutive d'une structure qui peut être monocouche ou multicouche.

### [Description détaillée de l'invention]

D'autres caractéristiques, aspects, objets et avantages de la présente invention apparaîtront encore plus clairement à la lecture de la description et des exemples qui suivent.

La nomenclature utilisée pour définir les polyamides est décrite dans la norme ISO 1874-1:1992 *"Plastiques* - *Matériaux polyamides (PA) pour moulage et extrusion* - *Partie 1 : Désignation",* notamment en page 3 (tableaux 1 et 2) et est bien connue de l'homme du métier.

Il est par ailleurs précisé que les expressions *"compris entre... et..."* et "de... à..." utilisées dans la présente description doivent s'entendre comme incluant chacune des bornes mentionnées.

### Le polyamide semi-aromatique

La composition selon l'invention comprend au moins un polyamide semi-aromatique.

Ce polyamide semi-aromatique comprend au moins un premier motif répétitif semi-aromatique qui est obtenu à partir de la polycondensation d'une diamine et d'un acide dicarboxylique aromatique et le polyamide semi-aromatique comprend plus de 50% en mol de premier(s) motif(s) répétitif(s),.

La diamine comprend avantageusement entre 4 et 36 atomes de carbone.

La diamine peut être choisie parmi les diamines aliphatiques, les diamines cycloaliphatiques et les diamines alkylaromatiques. Ces diamines peuvent être linéaires. Elles peuvent également être ramifiées et comporter au moins une ramification alkyle sur la chaîne principale, cette ramification alkyle pouvant être elle-même linéaire ou ramifiée.

Lorsque la diamine est aliphatique et linéaire, elle répond à la formule H₂N-(CH₂)ₓ-NH₂. Elle peut ainsi être choisie parmi la butanediamine (x=4), la pentanediamine (x=5), l'hexanediamine également dénommée hexaméthylènediamine (x=6), l'heptanediamine (x=7), l'octanediamine (x=8), la nonanediamine (x=9), la décanediamine (x=10), l'undécanediamine (x=11), la dodécanediamine (x=12), la tridécanediamine (x=13), la tetradécanediamine (x=14), l'hexadécanediamine (x=16), l'octadécanediamine (x=18), l'octadécènediamine (x=18), l'eicosanediamine (x=20), la docosanediamine (x=22) et les diamines obtenues à partir d'acides gras. De telles diamines présentent toutes l'avantage de pouvoir être bioressourcées et comporter du carbone organique issu de la biomasse, qui pourra être déterminé selon la norme ASTM D6866.

Lorsque la diamine est cycloaliphatique, elle peut être choisie parmi la bis(3,5-dialkyl-4-aminocyclohexyl)méthane, la bis(3,5-dialkyl-4-aminocyclohexyl)-éthane, la bis(3,5-dialkyl-4-aminocyclohexyl)propane, la bis(3,5-dialkyl-4-aminocyclohexyl)butane, la bis-(3-méthyl-4-aminocyclohexyl)-méthane (BMACM ou MACM), la p-bis(aminocyclohexyl)-méthane (PACM) et l'isopropylidènedi(cyclohexylamine) (PACP). La diamine cycloaliphatique peut également comporter les squelettes carbonés suivants : norbornyl méthane, cyclohexylméthane, dicyclohexylpropane, di(méthylcyclohexyl), di(méthylcyclohexyl) propane. Une liste non-exhaustive de ces diamines cycloaliphatiques est donnée dans la publication "Cycloaliphatic Aminés" (Encyclopaedia of Chemical Technology, Kirk-Othmer, 4th Edition (1992), pp. 386-405).

Lorsque la diamine est alkylaromatique, elle peut être choisie parmi la 1,3-xylylène diamine et la 1,4-xylylène diamine.

De manière avantageuse, la diamine est une diamine aliphatique.

De manière préférée, la diamine est une diamine aliphatique linéaire.

L'acide dicarboxylique aromatique peut être choisi parmi l'acide téréphtalique (noté T), l'acide isophtalique (noté I), l'acide phtalique et les acides naphtaléniques. Les acides dicarboxylique aromatiques qui viennent d'être cités peuvent également comprendre une ou plusieurs ramifications alkyles, ces ramifications alkyles pouvant être elles-mêmes linéaires ou ramifiées. On peut ainsi citer l'acide 2-méthyl-téréphtalique.

De manière avantageuse, le polyamide semi-aromatique présente une température de fusion supérieure à 240°C, avantageusement comprise entre 240°C et 310°C, et plus particulièrement comprise entre 260°C et 280°C.

De manière plus particulièrement préférée, l'acide dicarboxylique aromatique est l'acide téréphtalique (T).

Selon une version particulière de l'invention, le polyamide semi-aromatique peut comprendre plus de 60% en mol de premier(s) motif(s) répétitif(s),.

On peut en particulier envisager l'utilisation d'un polyamide semi-aromatique constitué de 100% en mol d'un ou de plusieurs premiers motifs répétitifs.

En particulier, selon un premier aspect de l'invention, ce polyamide semi-aromatique peut être un homopolymère et n'être constitué que de premiers motifs répétitifs issus de la réaction de polycondensation d'une diamine et d'un acide dicarboxylique aromatique.

Ainsi, le polyamide semi-aromatique peut être choisi parmi les homopolyamides 6.T, 9.T, 10.T, 11.T, 12.T, 14.T, 18.T, 6.I, 9.I, 10.I, 11.I, 12.I, 14.I et 18.I.

Selon un deuxième aspect de l'invention, ce polyamide semi-aromatique peut être un copolymère constitué de premiers motifs répétitifs issus de la réaction de polycondensation d'une diamine et de deux acides dicarboxyliques aromatiques ou de la réaction de polycondensation de deux diamines et d'un acide dicarboxylique aromatique.

Ainsi, dans le premier cas, le polyamide semi-aromatique peut être choisi parmi les copolyamides 6.T/6.I, 9.T/9.I, 10.T/10.I, 11.T/11.I et 12.T/12.I. Dans le deuxième cas, le polyamide semi-aromatique peut être choisi parmi les copolyamides 6.T/9.T, 6.T/10.T, 6.T/11.T, 6.T/12.T, 9.T/10.T, 9.T/11.T, 9.T/12.T, 10.T/11.T, 10.T/12.T et 11.T/12.T. Une liste similaire peut être établie, en remplaçant l'acide téréphtalique (T) par l'acide isophtalique (I).

Selon un troisième aspect de l'invention, ce polyamide semi-aromatique peut être un copolymère comprenant des premiers motifs répétitifs issus de la réaction de polycondensation d'au moins deux diamines et d'au moins deux acides dicarboxyliques aromatiques.

En plus de cet au moins un premier motif répétitif semi-aromatique qui vient d'être détaillé et qui est obtenu à partir de la polycondensation d'une diamine et d'un acide dicarboxylique aromatique, le polyamide semi-aromatique de la composition selon l'invention peut également comprendre au moins un second motif répétitif, ce second motif répétitif étant nécessairement distinct du ou des premiers motifs répétitifs.

Ce second motif répétitif peut être choisi parmi le groupe constitué d'un motif obtenu à partir d'un acide aminocarboxylique, d'un motif obtenu à partir d'un lactame et d'un motif répondant à la formule (diamine en Ca).(diacide en Cb), avec "a" représentant le nombre d'atomes de carbone de la diamine et "b" représentant le nombre d'atomes de carbone du diacide.

Avantageusement, a et b sont chacun compris entre 4 et 36.

Lorsque ce second motif répétitif est obtenu à partir d'un acide aminocarboxylique, cet acide aminocarboxylique peut être choisi parmi l'acide 9-aminononanoïque (9), l'acide 10-aminodécanoïque (10), l'acide 10-aminoundécanoïque (11), l'acide 12-aminododécanoïque (12) et l'acide 11-aminoundécanoïque (11). L'acide aminocarboxylique peut également être ramifié. A titre d'exemple, on peut citer l'acide N-heptyl-11-aminoundécanoïque.

Lorsque ce second motif répétitif est obtenu à partir d'un lactame, ce lactame peut être choisi parmi la pyrrolidinone, la 2-pipéridinone, l'énantholactame, le caprylolactame, le pelargolactame, le décanolactame (10), l'undécanolactame (11) et le lauryllactame (12).

Lorsque ce second motif répétitif est un motif répondant à la formule (diamine en Ca).(diacide en Cb), il est obtenu à partir de la polycondensation d'une diamine, la diamine en Ca, et d'un acide dicarboxylique, le diacide en Cb, étant précisé que cet acide dicarboxylique n'est pas un acide dicarboxylique aromatique.

Cette diamine en Ca peut être choisie parmi les diamines aliphatiques, les diamines cycloaliphatiques et les diamines alkylaromatiques. Ces diamines en Ca peuvent être linéaires. Elles peuvent également être ramifiées et comporter au moins une ramification alkyle sur la chaîne principale, cette ramification alkyle pouvant être elle-même linéaire ou ramifiée.

Les diamines décrites ci-dessus pour l'obtention du premier motif répétitif peuvent également être utilisées comme diamine en Ca pour l'obtention du second motif répétitif. On se reportera donc aux paragraphes ci-dessus relatifs aux diamines susceptibles d'être utilisées pour l'obtention du premier motif répétitif pour des exemples de diamines en Ca susceptibles d'être utilisées pour l'obtention du second motif répétitif.

L'acide dicarboxylique (diacide en Cb) mis en œuvre pour l'obtention du second motif répétitif peut être choisi parmi les acides dicarboxyliques aliphatiques et les acides dicarboxyliques cycloaliphatiques. Ces acides dicarboxyliques peuvent être linéaires. Ils peuvent également être ramifiés et comporter au moins une ramification alkyle sur la chaîne principale, cette ramification alkyle pouvant être elle-même linéaire ou ramifiée.

Lorsque l'acide dicarboxylique (diacide en Cb) est aliphatique et linéaire, il peut être choisi parmi l'acide succinique (4), l'acide pentanedioïque (5), l'acide adipique (6), l'acide heptanedioïque (7), l'acide octanedioïque (8), l'acide azélaïque (9), l'acide sébacique (10), l'acide undécanedioïque (11), l'acide dodécanedioïque (12), l'acide brassylique (13), l'acide tetradécanedioïque (14), l'acide hexadécanedioïque (16), l'acide octadécanedioïque (18), l'acide octadécènedioïque (18), l'acide eicosanedioïque (20), l'acide docosanedioïque (22) et les dimères d'acides gras contenant 36 carbones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Lorsque l'acide dicarboxylique (diacide en Cb) est cycloaliphatique, il peut comporter les squelettes carbonés suivants : norbornyl méthane, cyclohexane, cyclohexylméthane, dicyclohexylméthane, dicyclohexylpropane, di(méthylcyclohexyl), di(méthylcyclohexyl)propane.

Ainsi, le second motif répétitif du polyamide semi-aromatique peut notamment désigner les motifs suivants 6, 11, 12, 6.10, 6.12, 6.14, 6.18, 10.10, 10.12, 10.14, 10.18 et 12.12.

Selon un quatrième aspect de l'invention, ce polyamide semi-aromatique peut être un copolymère constitué de premiers motifs répétitifs issus de la réaction de polycondensation d'une diamine et d'un acide dicarboxylique aromatique et de seconds motifs répétitifs issus soit d'un acide aminocarboxylique, soit d'un lactame, soit de la polycondensation d'une diamine en Ca et d'un diacide en Cb tels que décrits ci-dessus.

Parmi les combinaisons envisageables, les copolyamides suivants présentent un intérêt particulièrement marqué : il s'agit des copolyamides répondant à l'une des formules choisies parmi 11/6.T, 12/6.T, 6.10/6.T, 6.12/6.T, 10.10/6.T, 10.12/6.T, 12.12/6.T, 11/9.T, 12/9.T, 6.10/9.T, 6.12/9.T, 10.10/9.T, 10.12/9.T, 12.12/9.T, 11/10.T, 12/10.T, 6.10/10.T, 6.12/10.T, 10.10/10.T, 10.12/10.T et 12.12/10.T.

Selon un cinquième aspect de l'invention, ce polyamide semi-aromatique peut être un copolymère comprenant des premiers motifs répétitifs issus de la réaction de polycondensation d'au moins une diamine et d'au moins un acide dicarboxylique aromatique et des seconds motifs répétitifs issus d'au moins un acide aminocarboxylique, d'au moins un lactame et/ou de la polycondensation d'une diamine en Ca et d'un diacide en Cb tels que décrits ci-dessus.

Parmi les multiples combinaisons envisageables, on peut notamment citer les copolyamides répondant à l'une des formules choisies parmi :
- 6/11/10.T, 6/12/10.T, 11/12/10.T, 11/6.10/10.T, 12/6.10/10.T, 11/10.6/10.T, 12/10.6/10.T, ces copolyamides comprenant tous un premier motif répétitif 10.T et deux seconds motifs répétitifs,
- 6/6.T/10.T, 11/6.T/10.T, 12/6.T/10.T, ces copolyamides comprenant tous deux premiers motifs répétitifs 6.T et 10.T et un second motif répétitif,
- 11/9.T/9.I, 12/9.T/9.I, 11/10.T/10.I, 12/10.T/10.I, ces copolyamides comprenant tous deux premiers motifs répétitifs et un second motif répétitif,
- 6/11/6.T/10.T, 11/12/6.T/10.T, ces copolyamides comprenant tous deux premiers motifs répétitifs 6.T et 10.T et deux seconds motifs répétitifs.

Dans le cadre de la présente invention, on peut avantageusement utiliser des premiers et, le cas échéant, seconds motifs répétitifs qui sont ou seront obtenus, en tout ou partie à partir de diamines, d'acides dicarboxyliques, d'acides amino-carboxyliques et/ou de lactames bioressourcés, c'est-à-dire comportant du carbone organique issu de la biomasse, qui pourra être déterminé selon la norme ASTM D6866.

### La polyoléfine réticulée

La composition selon l'invention comprend au moins une polyoléfine réticulée, ladite polyoléfine réticulée se présentant comme une phase dispersée dans la matrice formée par le(s) polyamide(s) semi-aromatique(s).

Cette polyoléfine réticulée provient de la réaction de deux ou d'au moins deux produits ayant des groupes réactifs entre eux.

Plus particulièrement, la polyoléfine réticulée est obtenue à partir d'au moins un produit (A) comprenant un époxyde insaturé et d'au moins un produit (B) comprenant un anhydride d'acide carboxylique insaturé.

Le produit (A) est avantageusement un polymère comprenant un époxyde insaturé, cet époxyde insaturé étant introduit dans ledit polymère, soit par greffage, soit par copolymérisation.

L'époxyde insaturé peut notamment être choisi parmi les époxydes suivants :
- les esters et éthers de glycidyle aliphatiques tels que l'allylglycidyléther, le vinylglycidyléther, le maléate et l'itaconate de glycidyle, l'acrylate et le méthacrylate de glycidyle, et
- les esters et éthers de glycidyle alicycliques tels que le 2-cyclohexène-1-glycidyléther, le cyclohexène-4,5-diglycidyl carboxylate, le cyclohexène-4-glycidyl carboxylate, 5-norbornène-2-méthyl-2-glycidyl carboxylate et endocis-bicyclo(2,2,1)-5-heptène-2,3-diglycidyl dicarboxylate.

Selon une première forme, le produit (A) est une polyoléfine greffée par un époxyde insaturé. On entend par polyoléfine, un homopolymère ou copolymère comprenant un ou plusieurs motifs oléfines tels que des motifs éthylène, propylène, butène-1 ou toute autre alpha-oléfine. A titre d'exemple de polyoléfine, on peut citer :
- le polyéthylène et, notamment, le polyéthylène basse densité (LDPE), le polyéthylène haute densité (HDPE), le polyéthylène à basse densité linéaire (LLDPE) et le polyéthylène très basse densité (VLDPE) ; le polypropylène ; les copolymères éthylène/propylène ; les polyoléfines élastomères comme l'éthylène-propylène (EPR ou EPM) ou l'éthylènepropylène-diène monomère (EPDM) ; ou encore les polyéthylènes métallocènes obtenus par catalyse monosite ;
- les copolymères blocs styrène/éthylène-butène/styrène (SEBS) ; les copolymères blocs styrène/butadiène/styrène (SBS) ; les copolymères blocs styrène/isoprène/styrène (SIS) ; ou encore les copolymères blocs styrène/éthylène-propylène/styrène ;
- les copolymères de l'éthylène et d'au moins un produit choisi parmi les sels d'acides carboxyliques insaturés, les esters d'acides carboxyliques insaturés et les esters vinyliques d'acides carboxyliques saturés. La polyoléfine peut notamment être un copolymère d'éthylène et de (méth)acrylate d'alkyle ou un copolymère d'éthylène et d'acétate de vinyle.

Selon une deuxième forme, le produit (A) est un copolymère d'alpha-oléfine et d'un époxyde insaturé et, avantageusement, un copolymère de l'éthylène et d'un époxyde insaturé. Avantageusement, la quantité d'époxyde insaturé peut représenter jusqu'à 15% en poids du copolymère (A), la quantité d'éthylène représentant quant à elle au moins 50% en poids du copolymère (A).

On peut plus particulièrement citer les copolymères de l'éthylène, d'un ester vinylique d'acide carboxylique saturé et d'un époxyde insaturé ainsi que les copolymères de l'éthylène, d'un (méth)acrylate d'alkyle et d'un époxyde insaturé. De préférence, l'alkyle du (méth)acrylate comprend de 2 à 10 atomes de carbone. Des exemples d'acrylates ou méthacrylates d'alkyle utilisables sont notamment l'acrylate de méthyle, le méthacrylate de méthyle, l'acrylate d'éthyle, l'acrylate de n-butyle, l'acrylate d'isobutyle et l'acrylate de 2-éthylhexyle.

Selon une version avantageuse de l'invention, le produit (A) est un copolymère d'éthylène, d'acrylate de méthyle et de méthacrylate de glycidyle ou un copolymère d'éthylène, d'acrylate de n-butyle et de méthacrylate de glycidyle. On pourra notamment utiliser le produit commercialisé par la société ARKEMA sous la dénomination LOTADER^{®} AX8900.

Selon une autre forme de l'invention, le produit (A) est un produit ayant deux fonctions époxyde, tel que par exemple le diglycidyl éther du bisphénol A (DGEBA).

Le produit (B) est avantageusement un polymère comprenant un anhydride d'acide carboxylique insaturé, cet anhydride d'acide carboxylique insaturé étant introduit dans ledit polymère, soit par greffage, soit par copolymérisation.

Des exemples d'anhydrides d'acide dicarboxylique insaturé utilisables comme constituants du produit (B) sont notamment l'anhydride maléique, l'anhydride itaconique, l'anhydride citraconique et l'anhydride tétrahydrophtalique.

Selon une première forme, le produit (B) est une polyoléfine greffée par un anhydride d'acide carboxylique insaturé. Comme on l'a vu ci-dessus, une polyoléfine est un homopolymère ou copolymère comprenant un ou plusieurs motifs oléfines tels que des motifs éthylène, propylène, butène-1 ou toute autre alpha-oléfine. Cette polyoléfine peut être notamment choisie parmi les exemples de polyoléfines listés plus haut pour le produit (A), lorsque ce dernier est une polyoléfine greffée par un époxyde insaturé.

Selon une deuxième forme, le produit (B) est un copolymère d'alpha-oléfine et d'un anhydride d'acide carboxylique insaturé et, avantageusement, un copolymère de l'éthylène et d'un anhydride d'acide carboxylique insaturé. Avantageusement, la quantité d'anhydride d'acide carboxylique insaturé peut représenter jusqu'à 15% en poids du copolymère (B), la quantité d'éthylène représentant quant à elle au moins 50% en poids du copolymère (B).

On peut plus particulièrement citer les copolymères de l'éthylène, d'un ester vinylique d'acide carboxylique saturé et d'un anhydride d'acide carboxylique insaturé ainsi que les copolymères de l'éthylène, d'un (méth)acrylate d'alkyle et d'un anhydride d'acide carboxylique insaturé. De préférence, l'alkyle du (méth)acrylate comprend de 2 à 10 atomes de carbone. L'acrylate ou le méthacrylate d'alkyle peut être choisi parmi ceux cités plus haut pour le produit (A).

Selon une version avantageuse de l'invention, le produit (B) est un copolymère de l'éthylène, d'un (méth)acrylate d'alkyle et d'un anhydride carboxylique insaturé. Préférentiellement, le produit (B) est un copolymère d'éthylène, d'acrylate d'éthyle et d'anhydride maléique ou un copolymère d'éthylène, d'acrylate de butyle et d'anhydride maléique. On pourra notamment utiliser les produits commercialisés par la société ARKEMA sous les dénominations LOTADER^{®} 4700 et LOTADER^{®} 3410.

On ne sortirait pas du cadre de l'invention si une partie de l'anhydride maléique du produit (B), selon les première et deuxième formes qui viennent d'être décrites, était en partie hydrolysée.

Selon l'invention, les teneurs pondérales en produit (A) et en produit (B), que l'on note respectivement [A] et [B], sont telles que le rapport [B] / [A] est compris entre 4 et 14.

Dans la composition selon l'invention, la polyoléfine réticulée peut également être obtenue à partir des produits (A), (B) tels que décrits ci-dessus et d'au moins un produit (C), ce produit (C) comprenant un acide carboxylique insaturé ou un acide alpha-oméga-aminocarboxylique.

Le produit (C) est avantageusement un polymère comprenant un acide carboxylique insaturé ou un acide alpha-oméga-aminocarboxylique, l'un ou l'autre de ces acides étant introduit dans ledit polymère par copolymérisation.

Des exemples d'acides carboxyliques insaturés utilisables comme constituants du produit (C) sont notamment l'acide acrylique, l'acide méthacrylique, les anhydrides d'acide carboxylique cités plus haut comme constituants du produit (B), ces anhydrides étant totalement hydrolysés.

Des exemples d'acides alpha-oméga-aminocarboxyliques utilisables comme constituants du produit (C) sont notamment l'acide 6-aminohexanoïque, l'acide 11-aminoundécanoïque et l'acide 12-aminododécanoïque.

Le produit (C) peut être un copolymère d'alpha-oléfine et d'un acide carboxylique insaturé et, avantageusement, un copolymère de l'éthylène et d'un acide carboxylique insaturé. On peut notamment citer les copolymères totalement hydrolysés du produit (B).

Selon une version avantageuse de l'invention, le produit (C) est un copolymère de l'éthylène et de l'acide (méth)acrylique ou un copolymère de l'éthylène, d'un (méth)acrylate d'alkyle et de l'acide (méth)acrylique. La quantité d'acide (méth)acrylique peut représenter jusqu'à 10% en poids et, de préférence, de 0,5 à 5% en poids du copolymère (C). La quantité de (méth)acrylate d'alkyle est généralement comprise entre 5 et 40% en poids du copolymère (C).

Préférentiellement, le produit (C) est un copolymère d'éthylène, d'acrylate de butyle et d'acide acrylique. On pourra notamment utiliser le produit commercialisé par la société BASF sous la dénomination LUCALENE^{®} 3110.

Selon l'invention, les teneurs pondérales en produit (A), en produit (B), en produit (C) que l'on note respectivement [A], [B] et [C] sont telles que le rapport [B] / ([A]+[C]) est compris entre 1,5 et 8, les teneurs pondérales en produits (A) et (B) étant telles que [C] ≤ [A].

De manière avantageuse, le rapport [B] / ([A]+[C]) est compris entre 2 et 7.

La phase dispersée de polyoléfine réticulée peut bien entendu provenir de la réaction d'un ou plusieurs produits (A) avec un ou plusieurs produits (B) et, le cas échéant, avec un ou plusieurs produits (C).

Comme déjà décrit dans le document WO 2011/015790, on peut utiliser des catalyseurs permettant d'accélérer la réaction entre les fonctions réactives des produits (A) et (B). On se reportera donc à l'enseignement de ce document pour ce qui concerne des exemples de catalyseurs, ceux-ci pouvant être utilisés dans une teneur pondérale comprise entre 0,1 et 3% et, avantageusement, entre 0,5 et 1% du poids total des produits (A), (B) et, le cas échéant, (C).

La composition selon l'invention comprend, par rapport au poids total de la composition :
- de 45 à 95% en poids, avantageusement de 55 à 90% en poids, de polyamide(s) semi-aromatique(s), et
- de 5 à 55% en poids, avantageusement de 10 à 45% en poids, de polyoléfine(s) réticulée(s).

Cette composition peut être seulement constituée de ces deux familles de composés, à savoir d'au moins un polyamide semi-aromatique et d'au moins une polyoléfine réticulée.

Toutefois, la composition peut également comprendre d'autres composés en dehors de ceux qui viennent d'être cités. La composition selon l'invention peut notamment comprendre en outre au moins un additif et/ou au moins un polymère supplémentaire.

### Les additifs

La composition selon l'invention peut également comprendre en outre au moins un additif.

Cet additif peut notamment être choisi parmi les adjuvants aidant à la transformation (ou processing aids), les plastifiants, les charges, les stabilisants (UV et/ou à la chaleur), les colorants, les agents de démoulage, les agents d'ignifugation, les agents tensio-actifs, les azurants optiques, les anti-oxydants et leurs mélanges.

Parmi les adjuvants aidant à la transformation ou processing aids, on peut citer les stéarates, tels que les stéarates de calcium ou de zinc, les cires naturelles, les polymères comprenant du tétrafluoroéthylène (TFE).

La proportion pondérale en processing aids est classiquement comprise entre 0,01 et 0,3% en poids, avantageusement entre 0,02 et 0,1% en poids, par rapport au poids total de la composition.

Parmi les plastifiants, on peut notamment utiliser les dérivés de benzène sulfonamide parmi lesquels le n-butyl benzène sulfonamide (BBSA).

La proportion pondérale en plastifiant, peut représenter jusqu'à 25% en poids et est avantageusement comprise entre 3 et 20% en poids, par rapport au poids total de la composition.

Parmi les charges, on peut citer la silice, le graphite, le graphite expansé, le noir de carbone, les fibres de carbone, les billes de verre, le kaolin, la magnésie, les scories, le talc, les nanocharges (nanotubes de carbone), les pigments, oxydes métalliques (oxyde de titane), les métaux, les fibres (aramides, de verre, de carbone).

En fonction de la nature des charges, la quantité de ces dernières peut représenter jusqu'à 50% en poids, avantageusement, jusqu'à 30% en poids, du poids total de la composition.

### Les polymères supplémentaires

Une composition conforme à l'invention peut en outre comprendre un ou plusieurs polymères supplémentaires, et notamment au moins un troisième polymère, un tel polymère étant distinct du(des) polyamide(s) semi-aromatique(s) et de la (ou des) polyoléfine(s) réticulée(s) mentionnés ci-avant.

Avantageusement, ce polymère supplémentaire peut notamment être choisi parmi un polyamide, un polyamide-bloc-éther, un polyétheramide, un polyesteramide, un polysulfure de phénylène (PPS), un polyphénylène oxyde (PPO), une polyoléfine non réticulée (par opposition à la polyoléfine réticulée envisagée ci-avant), un polymère fluoré, et leurs mélanges. S'agissant des polyoléfines non réticulées, on peut citer les polyoléfines décrites dans le chapitre "la polyoléfine réticulée", c'est-à-dire les produits (A), (B) ou (C) qui sont alors utilisés seuls pour ne pas réticuler, étant noté que ces polyoléfines non réticulées sont par ailleurs connues comme modifiants-chocs.

Le polymère supplémentaire peut également être choisi parmi l'amidon, qui peut être modifié et/ou formulé, la cellulose ou ses dérivés comme l'acétate de cellulose ou les éthers de cellulose, le polyacide lactique, le polyacide glycolique et les polyhydroxyalcanoates.

De préférence, le polymère supplémentaire est choisi parmi les polyamides aliphatiques et les polyamides-bloc-éthers.

La composition peut contenir jusqu'à 20% en poids, par rapport au poids total de la composition, d'au moins un polymère supplémentaire.

L'invention porte également sur un procédé de préparation d'une composition telle que définie ci-dessus. Selon ce procédé, la composition peut être préparée par toute méthode qui rend possible l'obtention d'un mélange homogène telle que l'extrusion à l'état fondu, le compactage ou encore le malaxeur à rouleaux.

Plus particulièrement, la composition selon l'invention peut être préparée par mélange à l'état fondu du(des) polyamide(s) semi-aromatique(s) et des produits (A), (B) et éventuellement (C) permettant d'obtenir la (ou les) polyoléfine(s) réticulée(s).

Les éventuels additifs et/ou polymères supplémentaires peuvent, quant-àeux, être introduits, soit en même temps que les polyamide(s) semi-aromatique(s) et produits (A), (B) et, le cas échéant, (C), soit lors d'une étape ultérieure.

Avantageusement, la composition peut être obtenue sous forme de granulés par compoundage, notamment au moyen d'une extrudeuse bi-vis, d'un comalaxeur ou d'un mélangeur interne. Ces granulés de la composition selon l'invention obtenue par le procédé de préparation décrit ci-dessus peuvent être ensuite transformés à l'aide d'outils connus de l'homme de l'art (tels qu'une presse à injecter ou une extrudeuse) sous forme de filaments, de tubes, de films et/ou d'objets moulés.

Le procédé de préparation de la composition selon l'invention peut aussi utiliser une extrudeuse bi-vis alimentant, sans granulation intermédiaire, une presse à injecter ou une extrudeuse pour la réalisation de filaments, de tubes, de films et/ou d'objets moulés.

L'invention porte ainsi aussi sur un matériau ou article obtenu à partir d'une composition telle que définie ci-dessus par un procédé de transformation connu tel que l'injection, l'extrusion, l'extrusion-soufflage, la co-extrusion ou la multi-injection.

L'invention porte également sur l'utilisation d'une composition telle que décrite ci-dessus pour constituer une structure. Cette structure peut être monocouche lorsqu'elle n'est formée que de la composition selon l'invention. Cette structure peut également être multicouche, lorsqu'elle comprend au moins deux couches et que l'une au moins de ces différentes couches est constituée de la composition selon l'invention.

L'invention porte également sur une pièce formée en tout ou partie à partir de la composition selon l'invention. Cette pièce peut comprendre la structure monocouche ou multicouche qui vient d'être mentionnée. Une telle pièce peut notamment être une pièce injectée et, plus particulièrement, une pièce extrudée, coextrudée ou extrudée-soufflée. Elle peut notamment se présenter sous la forme d'un tube, d'un tuyau, d'un réservoir, de fibres, d'un film, d'une feuille ou d'une plaque.

L'invention porte enfin sur l'utilisation d'une telle pièce pour stocker ou véhiculer un fluide. Un tel fluide peut notamment être choisi parmi un carburant, un fluide réfrigérant, un liquide de refroidissement, un liquide de frein, une huile, un lubrifiant, un fluide hydraulique, un liquide à base de solution d'urée, un produit chimique, de l'eau ou encore un gaz ou des émanations de gaz ou vapeurs, ce gaz pouvant être en pression ou en dépression.

La pièce formée en tout ou partie à partir de la composition selon l'invention peut notamment être utilisée pour la réalisation de tout ou partie d'éléments de matériel chirurgical, d'emballage, d'articles de sport ou de loisirs. Cette pièce peut également être utilisée pour la réalisation de tout ou partie d'éléments de biens d'équipements électriques et électroniques, d'équipements industriels pour le stockage, le transport ou le transfert de fluides tels que ceux listés ci-dessus ou encore d'équipements automobiles ou pour camions.

D'autres buts et avantages de la présente invention apparaîtront à la lecture des exemples suivants donnés à titre indicatif et nullement limitatif ainsi qu'à l'examen des figures, étant précisé que :
- la figure 1 est un cliché de microscopie électronique à balayage (MEB) d'un échantillon de la composition 9, après dissolution de la phase dispersée de polyoléfine réticulée par traitement avec du xylène à 150°C pendant 30 min, et
- la figure 2 est un cliché de microscopie électronique à balayage (MEB) d'un échantillon de la composition 1, après dissolution de la phase dispersée de polyoléfine réticulée par traitement avec xylène à 150°C pendant 30 min,
ces deux clichés étant à la même échelle.

### [Exemples]

### Formulation des compositions

Les compositions testées ont été préparées à partir des produits suivants :
- 11/10.T :: polyamide semi-aromatique, de ratio molaire 11/10.T égal à 0.7, obtenu par polycondensation d'acide 11-aminocarboxylique, de 1,10-décanediamine et d'acide téréphtalique, a une température de transition vitreuse Tg de 88°C, une température de fusion Tf de 260°C, une viscosité inhérente de 1,22 (mesurée selon la norme ISO 307) et une enthalpie de fusion de 47 J/g
- Lotader AX8900 :: copolymère d'éthylène, d'acrylate de méthyle et de méthacrylate de glycidyle (Et/MA/GMA - 68/24/8 en poids), correspond au produit (A)
- Lotader 4700 :: copolymère d'éthylène, d'acrylate d'éthyle et d'anhydride maléique (Et/EA/MAH - 69/30/1 en poids), correspond au produit (B)
- Lotader 3410 :: copolymère d'éthylène, d'acrylate de butyle et d'anhydride maléique (Et/BA/MAH - 81/16/3 en poids), correspond au produit (B)
- Lucalène 3110 :: copolymère d'éthylène, d'acrylate de butyle et d'acide acrylique (Et/BA/AA - 88/8/4 en poids), correspond au produit (C)
- Iodine 201 :: additif antioxydant à base de KI et de Cul

Les compositions 1 à 9 ont toutes été préparées sur une extrudeuse bi-vis, selon les formulations détaillées dans le Tableau 1 ci-dessous, la teneur en polyoléfine réticulée étant égale à 30% en poids du poids total de chacune des compositions 1 à 9.

Les compositions 4, 5 et 8 à 9 sont des compositions conformes à l'invention tandis que les compositions 1, 2, 3, 6 et 7 sont des compositions hors invention. En particulier, la composition 2 correspond à la composition E décrite dans le document WO 2011/015790.

### Tests conduits

La morphologie des compositions 1 à 9 a été étudiée par microscopie électronique à balayage (MEB). Les diamètres moyens en volume des nodules de polyoléfine réticulée, notés Dv, ont été mesurés et reportés dans le Tableau 1.

L'indice d'écoulement à l'état fondu, également dénommé indice de fluidité ou Melt Flow Index (MFI), a été mesuré selon la norme ASTM D1238 à 300°C, sous un poids de 5 kg et les valeurs reportées dans le Tableau 1.

Des mesures de viscosité plan-plan ont été réalisées à 300°C (10 rad/s). Les valeurs initiales et après 30 minutes ainsi que la différence entre les valeurs à 30 minutes et initiale sont reportées dans le Tableau 1.

Les compositions 1 à 9 ont ensuite été extrudées sous forme de tubes de 8 mm de diamètre et d'1 mm d'épaisseur (8*1mm). On a observé si, lors de cette transformation par extrusion, se formaient des dépôts ("larmes") sur la filière d'extrusion. On a également examiné l'aspect des surfaces intérieure et extérieure des tubes extrudés. Les constats sont reportés dans le Tableau 1 ci-dessous, étant précisé que chacune des abréviations suivantes :
- "-" signifie que les surfaces des tubes sont rugueuses et que des larmes apparaissent,
- "+" signifie que les surfaces des tubes sont lisses mais mates et qu'un peu de larmes se forme,
- "++" signifie que les surfaces des tubes sont lisses et brillantes et que très peu, voir pas, de larmes se forment.

**Tableau 1**

| Composition | 1 | 2 | 3 | 4 | 5 | 6 | 7 | 8 | 9 |
|---|---|---|---|---|---|---|---|---|---|
| 11/10.T | 69.3 | 69.3 | 69.3 | 69.3 | 69.3 | 69.3 | 69.3 | 69.3 | 69.3 |
| (B) Lotader 4700 | 10 | 15 | 20 | 24 | 26 | | | | |
| (B) Lotader 3410 | | | | | | 20 | 22.5 | 25 | 24 |
| (A) Lotader AX8900 | 10 | 7.5 | 10 | 4 | 4 | 10 | 7.5 | 5 | 4 |
| (C) Lucalène 3110 | 10 | 7.5 | | 2 | | | | | 2 |
| Iodine 201 | 0.7 | 0.7 | 0.7 | 0.7 | 0.7 | 0.7 | 0.7 | 0.7 | 0.7 |
| [B] / [A] | 1 | 2 | 2 | 6 | 6.5 | 2 | 3 | 5 | 6 |
| [B] / ([A] + [C]) | 0.5 | 1 | | 4 | | | | | 4 |
| Dv (µm) | 18.8 | 2.2 | 0.63 | 0.74 | 0.64 | 0.49 | 0.7 | 0.52 | 0.52 |
| MFI (g/10 min) | <1 | 2.2 | <1 | 4.7 | 2.9 | <1 | 1 | 1.5 | 2.3 |
| Plan-plan initiale (Pa.s) | 4300 | 3590 | 4200 | 2213 | 2250 | 5970 | 4710 | 3500 | 3000 |
| Plan-plan 30 min (PA.s) | 7800 | 7380 | 6340 | 3500 | 3850 | 7150 | 5770 | 4140 | 5020 |
| Δ Plan-plan | 3500 | 3790 | 2140 | 1287 | 1600 | 1180 | 1060 | 640 | 2020 |
| Aspect des tubes et larmes | - | + | + | ++ | ++ | + | ++ | ++ | ++ |

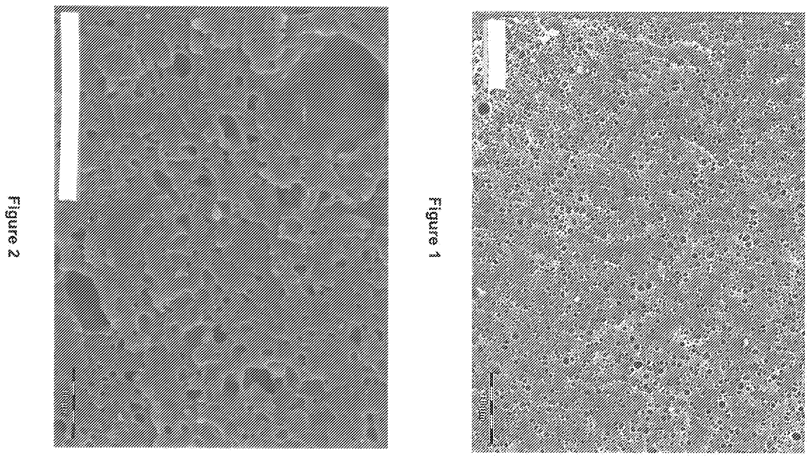

On observe que, contrairement aux compositions comparatives 1 et 2, les compositions 4, 5 et 7 à 9 conformes à l'invention présentent toutes une morphologie fine, avec des nodules de polyoléfine réticulée présentant un diamètre moyen en volume Dv d'une valeur inférieure à 1 µm. On pourra en particulier se reporter à la figure 1 qui montre clairement la dispersion particulièrement fine des nodules dans la composition 9 par rapport à celle des nodules dans la composition 1 illustrée à la figure 2.

On observe que, dans le cas des compositions 1 à 5 d'une part et des compositions 6 à 9 d'autre part, plus le [B]/[A] ou le [B]/([A]+[C]) est élevé, plus la morphologie (Dv) est fine. De même, plus le [B]/[A] ou le [B]/([A]+[C]) est élevé, meilleure est la rhéologie : la composition étant plus fluide et plus stable (c'est-à-dire qu'elle n'évolue que peu à chaud), elle permet une transformation par extrusion plus facile.

En outre, on observe que, lors de la transformation par extrusion des compositions 4, 5 et 7 à 9 selon l'invention, il n'y a pas (ou très peu) eu formation de larmes sur la filière d'extrusion et que les tubes extrudés à partir de ces mêmes compositions 4, 5 et 7 à 9 présentaient tous une surface intérieure et une surface extérieure lisses et brillantes.

## Revendications

1. Composition comprenant au moins un polyamide semi-aromatique et au moins une polyoléfine réticulée, la polyoléfine réticulée étant obtenue à partir :
- d'au moins un produit (A) comprenant un époxyde insaturé et
- d'au moins un produit (B) comprenant un anhydride d'acide carboxylique insaturé, **caractérisée en ce que** les teneurs pondérales en (A) et (B), notées respectivement [A] et [B], sont telles que le rapport [B] / [A] est compris entre 4 et 14,
ledit polyamide semi-aromatique comprenant au moins un premier motif répétitif semi-aromatique obtenu à partir de la polycondensation d'une diamine et d'un acide dicarboxylique aromatique et ledit polyamide semi-aromatique comprenant plus de 50% en mol de premier(s) motif(s) répétitif(s).

2. Composition selon la revendication 1, **caractérisée en ce que** la polyoléfine réticulée est obtenue à partir des produits (A), (B) et d'au moins un produit (C) comprenant un acide carboxylique insaturé ou un acide alpha-oméga-aminocarboxylique, les teneurs pondérales en (A), (B) et (C), notées respectivement [A], [B] et [C], étant telles que [C] ≤ [A] et le rapport [B] / ([A]+[C]) étant compris entre 1,5 et 8, avantageusement entre 2 et 7.

3. Composition selon la revendication 1 ou 2, **caractérisée** en ce le produit (A) est une polyoléfine greffée par un époxyde insaturé ou un copolymère d'alpha-oléfine et d'un époxyde insaturé.

4. Composition selon la revendication 3, **caractérisée en ce que** le produit (A) est un copolymère de l'éthylène, d'un ester vinylique d'acide carboxylique saturé et d'un époxyde insaturé ou un copolymère de l'éthylène, d'un (méth)acrylate d'alkyle et d'un époxyde insaturé.

5. Composition selon l'une quelconque des revendications 1 à 4, **caractérisée en ce que** le produit (B) est une polyoléfine greffée par un anhydride d'acide carboxylique ou un copolymère d'alpha-oléfine et d'un anhydride d'acide carboxylique.

6. Composition selon la revendication 5, **caractérisée en ce que** le produit (B) est un copolymère de l'éthylène, d'un ester vinylique d'acide carboxylique saturé et d'un anhydride d'acide carboxylique insaturé ou un copolymère de l'éthylène, d'un (méth)acrylate d'alkyle et d'un anhydride d'acide carboxylique insaturé.

7. Composition selon l'une quelconque des revendications 2 à 6, **caractérisé en ce que** le produit (C) est un copolymère d'alpha-oléfine et d'un acide carboxylique insaturé.

8. Composition selon la revendication 7, **caractérisée en ce que** le produit (C) est un copolymère de l'éthylène et de l'acide (méth)acrylique ou un copolymère de l'éthylène, d'un (méth)acrylate d'alkyle et de l'acide (méth)acrylique.

9. Composition selon l'une quelconque des revendications 1 à 8, **caractérisée en ce que** le polyamide semi-aromatique comprend au moins un premier motif répétitif semi-aromatique obtenu à partir de la polycondensation d'une diamine et d'un acide dicarboxylique aromatique.

10. Composition selon la revendication 9, **caractérisée en ce que** le polyamide semi-aromatique comprend au moins un second motif répétitif choisi parmi le groupe constitué d'un motif obtenu à partir d'un acide aminocarboxylique, d'un motif obtenu à partir d'un lactame et d'un motif répondant à la formule (diamine en Ca).(diacide en Cb), avec a représentant le nombre d'atomes de carbone de la diamine et b représentant le nombre d'atomes de carbone du diacide.

11. Composition selon la revendication 9 ou 10, **caractérisée en ce que** le polyamide semi-aromatique comprend plus de 50% en mol de premier motif répétitif, avantageusement plus de 60% en mol.

12. Composition selon l'une quelconque des revendications 1 à 11, **caractérisée en ce qu'**elle comprend au moins un additif choisi parmi les adjuvants aidant à la transformation (processing aids), les plastifiants, les charges, les stabilisants, les colorants, les agents de démoulage, les agents d'ignifugation, les agents tensio-actifs, les azurants optiques, les anti-oxydants et leurs mélanges.

13. Composition selon l'une quelconque des revendications 1 à 12, **caractérisé en ce que** la composition comprend au moins un polymère supplémentaire choisi parmi le groupe constitué par un polyamide, un polyamide-bloc-éther, un polyétheramide, un polyesteramide, un polysulfure de phénylène, un polyphénylène oxyde, une polyoléfine non réticulée et un polymère fluoré.

14. Procédé de préparation de la composition telle que définie à l'une quelconque des revendications 1 à 11, **caractérisée en ce que** la composition est préparée par mélange à l'état fondu du(des) polyamide(s) semi-aromatique(s) et des produits (A), (B) et éventuellement (C) permettant d'obtenir la (ou les) polyoléfine(s) réticulée(s).

15. Utilisation d'une composition telle que définie à l'une quelconque des revendications 1 à 13 pour constituer une structure monocouche ou au moins une couche d'une structure multicouche.

## Patentansprüche

1. Zusammensetzung, umfassend mindestens ein halbaromatisches Polyamid und mindestens ein vernetztes Polyolefin, wobei das vernetzte Polyolefin erhalten wird ausgehend von:
- mindestens einem Produkt (A), das ein ungesättigtes Epoxid umfasst, und
- mindestens einem Produkt (B), das ein ungesättigtes Carbonsäureanhydrid umfasst, **dadurch gekennzeichnet, dass** die Gewichtsanteile von (A) und (B), jeweils bezeichnet als [A] und [B], derart sind, dass das Verhältnis [B] / [A] zwischen 4 und 14 liegt,
wobei das halbaromatische Polyamid mindestens eine erste halbaromatische Wiederholungseinheit umfasst, die ausgehend von der Polykondensation eines Diamins und einer aromatischen Dicarbonsäure erhalten wird, und das halbaromatische Polyamid zu mehr als 50 Mol-% die erste(n) Wiederholungseinheit(en) umfasst.

2. Zusammensetzung nach Anspruch 1, **dadurch gekennzeichnet, dass** das vernetzte Polyolefin ausgehend von den Produkten (A), (B) und mindestens einem Produkt (C) erhalten wird, das eine ungesättigte Carbonsäure oder eine alpha,omega-Aminocarbonsäure umfasst, wobei die Gewichtsanteile von (A), (B) und (C), jeweils bezeichnet als [A], [B] und [C], derart sind, dass [C] ≤ [A], und wobei das Verhältnis [B] / ([A]+[C]) zwischen 1,5 und 8, vorteilhafterweise zwischen 2 und 7, liegt.

3. Zusammensetzung nach Anspruch 1 oder 2, **dadurch gekennzeichnet, dass** das Produkt (A) ein mit einem ungesättigten Epoxid gepfropftes Polyolefin oder ein Copolymer aus alpha-Olefin und einem ungesättigten Epoxid ist.

4. Zusammensetzung nach Anspruch 3, **dadurch gekennzeichnet, dass** das Produkt (A) ein Copolymer aus Ethylen, einem Vinylester von gesättigter Carbonsäure und einem ungesättigten Epoxid oder ein Copolymer aus Ethylen, einem Alkyl(meth)acrylat und einem ungesättigten Epoxid ist.

5. Zusammensetzung nach einem der Ansprüche 1 bis 4, **dadurch gekennzeichnet, dass** das Produkt (B) ein mit einem Carbonsäureanhydrid gepfropftes Polyolefin oder ein Copolymer aus alpha-Olefin und einem Carbonsäureanhydrid ist.

6. Zusammensetzung nach Anspruch 5, **dadurch gekennzeichnet, dass** das Produkt (B) ein Copolymer aus Ethylen, einem Vinylester von gesättigter Carbonsäure und einem ungesättigten Carbonsäureanhydrid oder ein Copolymer aus Ethylen, einem Alkyl(meth)acrylat und einem ungesättigten Carbonsäureanhydrid ist.

7. Zusammensetzung nach einem der Ansprüche 2 bis 6, **dadurch gekennzeichnet, dass** das Produkt (C) ein Copolymer aus alpha-Olefin und einer ungesättigten Carbonsäure ist.

8. Zusammensetzung nach Anspruch 7, **dadurch gekennzeichnet, dass** das Produkt (C) ein Copolymer aus Ethylen und (Meth)acrylsäure oder ein Copolymer aus Ethylen, einem Alkyl(meth)acrylat und (Meth)acrylsäure ist.

9. Zusammensetzung nach einem der Ansprüche 1 bis 8, **dadurch gekennzeichnet, dass** das halbaromatische Polyamid mindestens eine erste halbaromatische Wiederholungseinheit umfasst, die ausgehend von der Polykondensation eines Diamins und einer aromatischen Dicarbonsäure erhalten wird.

10. Zusammensetzung nach Anspruch 9, **dadurch gekennzeichnet, dass** das halbaromatische Polyamid mindestens eine zweite Wiederholungseinheit umfasst, ausgewählt aus der Gruppe bestehend aus einer von einer Aminocarbonsäure ausgehend erhaltenen Einheit, einer von einem Lactam ausgehend erhaltenen Einheit und einer Einheit nach der Formel (Ca-Diamin).(Cb-Disäure), wobei a die Anzahl von Kohlenstoffatomen des Diamins darstellt und b die Anzahl von Kohlenstoffatomen der Disäure darstellt.

11. Zusammensetzung nach Anspruch 9 oder 10, **dadurch gekennzeichnet, dass** das halbaromatische Polyamid zu mehr als 50 Mol-%, vorteilhafterweise zu mehr als 60 Mol-%, die erste Wiederholungseinheit umfasst.

12. Zusammensetzung nach einem der Ansprüche 1 bis 11, **dadurch gekennzeichnet, dass** sie mindestens einen Zusatzstoff umfasst, ausgewählt aus Hilfsmitteln, die bei der Verarbeitung helfen (Verarbeitungshilfsmitteln), Weichmachern, Füllstoffen, Stabilisatoren, Farbstoffen, Formtrennmitteln, Flammschutzmitteln, oberflächenaktiven Mitteln, optischen Aufhellern, Antioxidantien und deren Mischungen.

13. Zusammensetzung nach einem der Ansprüche 1 bis 12, **dadurch gekennzeichnet, dass** die Zusammensetzung mindestens ein zusätzliches Polymer umfasst, ausgewählt aus der Gruppe bestehend aus einem Polyamid, einem Polyamidblockether, einem Polyetheramid, einem Polyesteramid, einem Polyphenylensulfid, einem Polyphenylenoxid, einem nicht vernetzten Polyolefin und einem fluorierten Polymer.

14. Verfahren zum Herstellen der Zusammensetzung nach einem der Ansprüche 1 bis 11, **dadurch gekennzeichnet, dass** die Zusammensetzung durch Mischen, in geschmolzenem Zustand, des/der halbautomatischen Polyamids/Polyamide und der Produkte (A), (B) und gegebenenfalls (C) hergestellt wird, wodurch ermöglicht wird, das (oder die) vernetzte(n) Polyolefin(e) zu erhalten.

15. Verwendung einer Zusammensetzung nach einem der Ansprüche 1 bis 13 zum Bilden einer einschichtigen Struktur oder mindestens einer Schicht einer mehrschichtigen Struktur.

## Claims

1. A composition comprising at least one semi-aromatic polyamide and at least one cross-linked polyolefin, the cross-linked polyolefin being obtained from:
- at least one product (A) comprising an unsaturated epoxy and
- at least one product (B) comprising an unsaturated carboxylic acid anhydride, **characterized in that** the weight content of (A) and (B), noted respectively [A] and [B], are such that the [B]/[A] ratio is between 4 and 14,
said semi-aromatic polyamide comprising at least a first semi-aromatic repeating unit obtained from the polycondensation of a diamine and of an aromatic dicarboxylic acid and said semi-aromatic polyamide comprising over 50% mol of first repeating unit(s).

2. A composition according to claim 1, **characterized in that** the cross-linked polyolefin is obtained from products (A), (B) and at least one product (C) comprising an unsaturated carboxylic acid or an alpha-omega-aminocarboxylic acid, the weight contents of (A), (B) and (C), noted respectively as [A], [B] and [C], being such that [C] ≤ [A] and the [B]/([A]+[C]) ratio being between 1.5 and 8, advantageously between 2 and 7.

3. A composition according to claim 1 or 2, **characterized in that** the product (A) is a polyolefin grafted with an unsaturated epoxide or a copolymer of alpha-olefin and of an unsaturated epoxide.

4. A composition according to claim 3, **characterized in that** the product (A) is a copolymer of ethylene, of a vinyl ester of saturated carboxylic acid and of an unsaturated epoxide or a copolymer of ethylene, of an alkyl (meth)acrylate and of an unsaturated epoxide.

5. A composition according to any of claims 1 to 4, **characterized in that** the the product (B) is a polyolefin grafted with a carboxylic acid anhydride or a copolymer of alpha-olefin and of a carboxylic acid anhydride.

6. A composition according to claim 5, **characterized in that** the product (B) is a copolymer of ethylene, of a vinyl ester of saturated carboxylic acid and of an unsaturated carboxylic acid anhydride or a copolymer of ethylene, of an alkyl (meth)acrylate and of an unsaturated carboxylic acid anhydride.

7. A composition according to any of claims 2 to 6, **characterized in that** the product (C) is a copolymer of alpha-olefin and of an unsaturated carboxylic acid.

8. A composition according to claim 7, **characterized in that** the product (C) is a copolymer of ethylene and of (meth)acrylic acid or a copolymer of ethylene, of an alkyl (meth)acrylate and of (meth)acrylic acid.

9. A composition according to any of claims 1 to 8, **characterized in that** the semi-aromatic polyamide comprises at least a first semi-aromatic repeating unit obtained from the polycondensation of a diamine and an aromatic dicarboxylic acid.

10. A composition according to claim 9, **characterized in that** the semi-aromatic polyamide comprises at least a second repeating unit selected from the group consisting of a unit obtained from an aminocarboxylic acid, a unit obtained from a lactam and a unit respecting the formula (Ca diamine).(Cb diacid), with a representing the number of carbon atoms of the diamine and b representing the number of carbon atoms of the diacid.

11. A composition according to claim 9 or 10, **characterized in that** the semi-aromatic polyamide comprises over 50% mol of first repeating unit, advantageously over 60% mol.

12. A composition according to any of claims 1 to 11, **characterized in that** it comprises at least one additive selected from the processing aids, plasticizers, fillers, stabilizers, dyes, mold release agents, fire-retardant agents, surfactants, optical brighteners, antioxidants and their mixtures.

13. A composition according to any of claims 1 to 12, **characterized in that** the composition comprises at least one additional polymer selected from the group consisting of a polyamide, a polyether block amide, a polyetheramide, a polyesteramide, a polyphenylene sulfide, a polyphenylene oxide, a non-cross-linked polyolefin and a fluoropolymer.

14. A method for preparing the composition as defined in any of claims 1 to 11, **characterized in that** the composition is prepared by melt-mixing of the semi-aromatic polyamide(s) and products (A), (B) and optionally (C), and obtaining the cross-linked polyolefin(s).

15. Use of a composition as defined according to any one of claims 1 to 13 to form a single-layer structure or at least one layer of a multilayer structure.
